# EUROPÄISCHE PATENTSCHRIFT

(11) **EP 3 638 488 B1**
(45) Veröffentlichungstag und Bekanntmachung des Hinweises auf die Patenterteilung: **04.11.2020**
(21) Anmeldenummer: 18755408.4
(22) Anmeldetag: 30.07.2018
(51) Int. Cl.: B29C 64/321, B29C 64/209, B29C 64/343, B05C 11/02, B05C 11/10, B29C 31/02, B28B 13/02, B33Y 30/00, B22F 3/105, B29K 105/00

(54) **BESCHICHTERANORDNUNG FÜR EINEN 3D-DRUCKER**
COATING ARRANGEMENT FOR A 3D PRINTER
SYSTÈME DE REVÊTEMENT POUR IMPRIMANTE 3D

(30) Priorität: 01.09.2017 DE 102017120205
(43) Veröffentlichungstag der Anmeldung: 22.04.2020
(73) Patentinhaber: ExOne GmbH, 86368 Gersthofen (DE)
(72) Erfinder: MÜLLER, Alexander, 86420 Diedorf (DE); LEINAUER, Thomas, 86420 Diedorf (DE); HUBER, Thomas, 86551 Aichach (DE)
(74) Vertreter: Viering, Jentschura & Partner mbB Patent- und Rechtsanwälte
(86) Internationale Anmeldenummer: PCT/EP2018/070620
(87) Internationale Veröffentlichungsnummer: WO 2019/042681

(56) Entgegenhaltungen:
- EP-A1- 3 085 517
- EP-A1- 3 098 064
- CN-A- 106 696 260
- US-A1- 2017 050 270

## Beschreibung

Die vorliegende Erfindung betrifft eine Beschichteranordnung für einen 3D-Drucker sowie einen 3D-Drucker mit solch einer Beschichteranordnung.

Verschiedene Beschichteranordnungen für 3D-Drucker sind zum Beispiel aus DE 10 2014 112 454 A1, EP 3 085 517 A1, EP 3 098 064 A1, US 2017/050270 A1 und CN 106 696 260 A bekannt.

Es sind verschiedene generative Fertigungsverfahren (und folglich verschiedene Arten von 3D-Druckern, also Maschinen/Anlagen zum schichtweisen Aufbau eines Bauteils) bekannt.

Die DE 10 2015 003 372 A1 offenbart ein Verfahren und eine Vorrichtung zum Herstellen von 3D-Formteilen mittels Schichtaufbautechnik, wobei ein Recoater zum Einsatz kommt, der in beide Verfahrrichtungen beschichten kann.

Einige generative Fertigungsverfahren haben die folgenden Schritte gemeinsam:
(1) Es wird zunächst Partikelmaterial (bzw. partikelförmiges Baumaterial) vollflächig/durchgängig auf ein Baufeld aufgebracht, um eine Schicht aus nicht-verfestigtem Partikelmaterial zu bilden.
(2) Die aufgebrachte Schicht aus nicht-verfestigtem Partikelmaterial wird in einem vorbestimmten Teilbereich (entsprechend dem zu fertigenden Bauteil) selektiv verfestigt, zum Beispiel durch selektives Aufdrucken von Behandlungsmittel, zum Beispiel Bindemittel, (alternativ zum Beispiel durch Lasersintern).
(3) Die Schritte (1) und (2) werden wiederholt, um ein gewünschtes Bauteil zu fertigen. Hierzu kann zum Beispiel eine Bauplattform, auf der das Bauteil schichtweise aufgebaut wird, jeweils um eine Schichtdicke abgesenkt werden, bevor eine neue Schicht aufgetragen wird (alternativ können zum Beispiel der Beschichter und die Druckvorrichtung jeweils um eine Schichtdicke angehoben werden).
(4) Schließlich kann das gefertigte Bauteil, das aus den verfestigten Teilbereichen gebildet ist und von losem, nicht-verfestigtem Partikelmaterial gestützt und umgeben ist, entpackt werden.

Der Bauraum, in dem das oder die Bauteile gefertigt werden, kann zum Beispiel von einer sogenannten Baubox (auch "Jobbox" genannt) definiert sein. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein Beispiel für eine solche Baubox ist zum Beispiel in DE 10 2009 056 696 A1 beschrieben. Der Bauraum kann aber zum Beispiel auch seitlich frei, d.h., umfangsseitig unbegrenzt sein. Ein oberer Bereich des Bauraums kann zum Beispiel als Baufeld bezeichnet werden.

In dem obigen Schritt (1) kommt in der Regel ein Beschichter (auch "Recoater" genannt) zum Einsatz. Es sind unterschiedliche Beschichter zur Verwendung in einem 3D-Drucker bekannt, mit denen ein partikelförmiges Baumaterial in Form einer gleichmäßigen, vollflächigen/durchgängigen Schicht auf das Baufeld (auch Baufläche oder Baubereich genannt) aufgebracht werden kann.

Eine Art von Beschichter verwendet eine Walze (kurz "Walzen-Beschichter"), vor der zunächst eine Menge an partikelförmigem Baumaterial abgelegt wird und die anschließend horizontal über das Baufeld hinweg verfahren wird, um das partikelförmige Baumaterial in Form einer gleichmäßigen Schicht auf das Baufeld aufzubringen. Die Walze kann dabei in Gegenlaufrichtung rotiert werden. Beschichteranordnungen mit großen Längen (und folglich groß-dimensionierte 3D-Drucker) sind mit einem Walzen-Beschichter schwierig darzustellen, unter anderem wegen einer möglichen Durchbiegung der Walze.

Eine andere Art von Beschichter (sog. "Behälter-Beschichter", zum Beispiel "Schlitz-Beschichter") verwendet einen Behälter, der einen inneren Hohlraum zur Aufnahme von partikelförmigem Baumaterial definiert, und hat einen (zum Beispiel langgestreckten) Ausgabebereich, zum Beispiel aufweisend einen (zum Beispiel langestreckten) Ausgabeschlitz, zum Ausgeben des partikelförmigen Baumaterials. Der Behälter-Beschichter kann zum Beispiel über ein Baufeld hinweg verfahrbar sein (zum Beispiel horizontal, zum Beispiel quer zu seiner Längsrichtung), wobei das partikelförmige Baumaterial durch den (langgestreckten) Ausgabebereich auf das Baufeld ausgebbar ist, um dadurch eine gleichmäßige, vollflächige/durchgängige Baumaterial-Schicht auf das Baufeld aufzubringen. Der Beschichter kann zum Beispiel langgestreckt sein, um die Länge oder Breite eines rechteckigen Baufelds zu überspannen bzw. abzudecken. Beschichteranordnungen mit großen Längen (und folglich groß-dimensionierte 3D-Drucker) können mit einem Behälter-Beschichter gut realisiert werden.

In dem obigen Schritt (2) kann zum Beispiel eine Druckvorrichtung mit einem Druckkopf zum Einsatz kommen, der auf einen Teilbereich der zuvor aufgebrachten Baumaterial-Schicht gesteuert ein Behandlungsmittel aufbringt. Das Behandlungsmittel trägt zu einer (unmittelbaren und/oder späteren) Verfestigung der Baumaterial-Schicht in dem Teilbereich bei. Zum Beispiel kann das Behandlungsmittel ein Bindemittel sein/enthalten, zum Beispiel eine Bindemittel-Komponente eines Mehrkomponenten-Bindemittels.

Alternativ kann in dem obigen Schritt (2) zum Beispiel ein Laser eingesetzt werden, um einen Teilbereich der zuvor aufgebrachten Baumaterial-Schicht zu verfestigen, insbesondere durch Sintern oder Schmelzen des Baumaterials in dem Teilbereich.

Die vorliegende Erfindung betrifft eine Beschichteranordnung der zweitgenannten Art, kurz eine Beschichteranordnung mit einem "Behälter-Beschichter", zum Beispiel "Schlitz-Beschichter".

Solche Beschichteranordnungen können zum Beispiel mit einer Vibrationsvorrichtung versehen sein, mit welcher das Partikelmaterial in Vibration versetzbar ist, um das Fließ- bzw. Rieselverhalten des partikelförmigen Baumaterials bzw. den Austrag des partikelförmigen Baumaterials aus dem Ausgabebereich zu beeinflussen, insbesondere zu fördern. Eine solche Vibrationsvorrichtung kann zum Beispiel von einer Rüttelvorrichtung gebildet sein, mit der ein Wandabschnitt des Behälters in Vibration versetzt bzw. mit einer Rüttelbewegung beaufschlagt werden kann, um den Austrag des partikelförmigen Baumaterials zu beeinflussen.

Ferner können solche Beschichteranordnungen zum Beispiel mit einem Streichelement versehen sein, mit welchem auf das Baufeld aufgebrachtes Baumaterial überstrichen werden kann, um das Baumaterial zu verdichten und/oder zu nivellieren. Das Streichelement kann zum Beispiel benachbart zu einem/dem Ausgabeschlitz angeordnet sein und/oder diesen zumindest teilweise begrenzen, und kann zum Beispiel zusammen mit dem Ausgabeschlitz den sogenannten Ausgabebereich des Beschichters bilden.

Ein Beispiel für eine Beschichteranordnung mit einem "Schlitz-Beschichter" ist aus der DE 10 2009 056 689 A1 bekannt. Siehe dort zum Beispiel die Figuren 17-20.

Ein weiteres Beispiel für einen "Schlitz-Beschichter" ist aus der WO 2016/030417 A1 und der WO 2016/030375 A2 bekannt, die jeweils einen sogenannten bidirektionalen Beschichter beschreiben. Siehe zum Beispiel die Figuren 2, 4, 5, 6, 7 der WO 2016/030417 A1.

Es ist zudem bekannt, die Behälterunterseite mit einer Beschichter-Reinigungsvorrichtung zu säubern. Eine geeignete Beschichter-Reinigungsvorrichtung ist zum Beispiel aus der DE 10 2009 056 687 A1 bekannt. Siehe dort zum Beispiel die Figur 21.

Des Weiteren ist es aus der eingangs erwähnten DE 10 2014 112 454 A1 bekannt, die Beschichteranordnung mit einer Schließvorrichtung zu versehen, die eingerichtet ist, um eine Öffnung des Beschichters zum Ausgeben des partikelförmigen Baumaterials auf ein Baufeld selektiv zu verschließen. Dies kann verschiedene Vorteile mit sich bringen, von denen einige in der DE 10 2014 112 454 A1 beschrieben sind, auf welche insofern Bezug genommen wird.

Die in DE 10 2014 112 454 A1 beschriebene Schließvorrichtung weist einen ersten und einen zweiten länglichen Hohlkörper auf, wobei jeder der beiden Hohlkörper einen inneren Hohlraum hat, der von einem verformbaren Abschnitt begrenzt ist, wobei die beiden Hohlkörper derart auf einander gegenüberliegenden Seiten der Ausgabeöffnung des Beschichters (in Beschichter-Querrichtung) angeordnet sind, dass die verformbaren Abschnitte einander zugewandt sind, und wobei die verformbaren Abschnitte eingerichtet sind, um von einem dem zugehörigen Hohlkörper zugeführten Druckfluid unter einer Expansion des inneren Hohlraums nach außen hin verformt zu werden, so dass die beiden verformbaren Abschnitte aufeinander zu bewegbar und miteinander in Kontakt bringbar sind, um hierdurch die Öffnung zu verschließen.

Es kann als eine Aufgabe der vorliegenden Erfindung angesehen werden, eine alternative oder verbesserte Beschichteranordnung für einen 3D-Drucker von dem Typ "Behälter-Beschichter" bereitzustellen.

Die vorliegende Erfindung stellt eine Beschichteranordnung für einen 3D-Drucker nach Anspruch 1 sowie einen 3D-Drucker mit solch einer Beschichteranordnung nach Anspruch 15 bereit. Weitere Ausgestaltungen der Beschichteranordnung sind in den abhängigen Ansprüchen 2-14 beschrieben.

Gemäß verschiedenen Ausführungsformen weist eine Beschichteranordnung für einen 3D-Drucker einen Beschichter auf, der einen Behälter, der einen inneren Hohlraum zur Aufnahme von partikelförmigem Baumaterial definiert, der in einer Behälteröffnung zum Ausgeben des partikelförmigen Baumaterials aus dem Behälter mündet, und einen Ausgabebereich hat, der eine Beschichter-Ausgabeöffnung zum Ausgeben des partikelförmigen Baumaterials aus dem Beschichter auf ein Baufeld definiert. Der Behälter ist relativ zu der Beschichter-Ausgabeöffnung bewegbar (z.B. schwenkbar), so dass durch ein Bewegen (z.B. Schwenkbewegen, z.B. Schwenken) des Behälters relativ zu der Beschichter-Ausgabeöffnung ein Austrag an partikelförmigem Baumaterial aus dem inneren Hohlraum durch die Behälteröffnung und die Beschichter-Ausgabeöffnung hindurch auf das Baufeld variierbar ist.

Im Sinne der vorliegenden Erfindung kann unter einem Variieren des Austrags zum Einen verstanden werden, dass zum Beispiel durch ein Bewegen des Behälters relativ zu der Beschichter-Ausgabeöffnung der Austrag an partikelförmigem Baumaterial dosierbar ist, d.h. der Menge nach einstellbar ist. Mit anderen Worten können infolge der Bewegung des Behälters unterschiedliche Mengen (zum Beispiel zwei oder mehr) an partikelförmigem Baumaterial ausgegeben werden, wobei die jeweilige Menge größer als "null" ist. Einer jeweiligen Menge kann dabei eine unterschiedliche Position des Behälters zugeordnet sein.

Im Sinne der vorliegenden Erfindung kann unter einem Variieren des Austrags zum Anderen verstanden werden, dass zum Beispiel durch ein Bewegen des Behälters relativ zu der Beschichter-Ausgabeöffnung der Austrag an partikelförmigem Baumaterial unterbindbar ist, d.h. der Beschichter selektiv verschließbar ist. Mit anderen Worten können infolge der Bewegung des Behälters unterschiedliche Mengen (zum Beispiel zwei oder mehr) an partikelförmigem Baumaterial ausgegeben werden, wobei eine der Mengen "null" ist.

Es sollte verstanden werden, dass die beiden oben beschriebenen Möglichkeiten alternativ oder gemeinsam verwirklicht sein können. In letzterem Fall können drei oder mehr unterschiedliche Mengen ausgegeben werden, von denen eine "null" ist.

Der Austrag an partikelförmigem Baumaterial kann zum Beispiel ausgedrückt werden in Form eines Massenstroms oder eines Volumenstroms an aus der Beschichter-Ausgabeöffnung austretendem Baumaterial.

Die beanspruchte Beschichteranordnung weist demnach eine Beschichter-Ausgabeöffnung und eine Behälteröffnung auf, welche miteinander für den Zweck des Ausgebens von partikelförmigem Baumaterial miteinander kommunizieren und deren Kommunikation durch Bewegen (z.B. Schwenkbewegen, z.B. Schwenken) des Behälters relativ zu der Beschichter-Ausgabeöffnung selektiv einstellbar ist.

Da das Einstellen besagter Kommunikation bzw. das Variieren des Austrags durch ein Bewegen des Behälters relativ zu der Beschichter-Ausgabeöffnung erfolgt, kann der Beschichter kompakt und relativ einfach aufgebaut sein. Zum Beispiel kann ein zusätzliches Schließelement und/oder ein zusätzliches Dosierelement eingespart werden. Es kann also eine Beschichteranordnung für einen 3D-Drucker bereitgestellt werden, die kompakt ausgebildet ist und/oder weniger komplex ausgebildet ist als die in DE 10 2014 112 454 A1 beschriebene Beschichteranordnung.

Wenn durch die Bewegung des Behälters relativ zu der Beschichter-Ausgabeöffnung ein Dosieren des Austrags ermöglicht ist, können die Handhabbarkeit und die Einsatzmöglichkeiten der Beschichteranordnung verbessert werden.

Wenn durch die Bewegung des Behälters relativ zu der Beschichter-Ausgabeöffnung ein Unterbinden des Austrags ermöglicht ist, kann eine zu der in DE 10 2014 112 454 A1 beschriebenen Beschichteranordnung alternative Beschichteranordnung für einen 3D-Drucker bereitgestellt werden, mit der ein selektives Verschließen des Beschichters ermöglicht ist.

Gemäß verschiedenen Ausführungsformen kann zum Beispiel vorgesehen sein, dass für ein Unterbinden des Austrags bzw. Verschließen des Beschichters, durch ein Bewegen des Behälters relativ zu der Beschichter-Ausgabeöffnung, die Behälteröffnung von der Beschichter-Ausgabeöffnung derart wegbewegbar ist (z.B. mit einer seitlichen Bewegungskomponente), dass aus der Behälteröffnung austretendes/ausrieselndes Baumaterial sich totläuft, bevor es die Beschichter-Ausgabeöffnung erreicht, d.h. einen Schüttkegel ausbildet, der sich nicht bis zu der Beschichter-Ausgabeöffnung hin erstreckt.

Gemäß verschiedenen Ausführungsformen kann zum Beispiel vorgesehen sein, dass für ein Unterbinden des Austrags bzw. Verschließen des Beschichters, durch ein Bewegen des Behälters relativ zu der Beschichter-Ausgabeöffnung, die Behälteröffnung von der Beschichter-Ausgabeöffnung derart wegbewegbar ist, dass in einer Draufsicht oder Untersicht des Beschichters keine Überlappung zwischen den beiden Öffnungen vorliegt.

Gemäß verschiedenen Ausführungsformen kann zum Beispiel vorgesehen sein, dass für ein Ausgeben von Baumaterial, d.h. ein Einstellen einer Menge größer "null", durch ein Bewegen des Behälters relativ zu der Beschichter-Ausgabeöffnung, die Behälteröffnung und die Beschichter-Ausgabeöffnung zueinander ausrichtbar sind, zum Beispiel derart, dass sie vollständig oder im Wesentlichen miteinander fluchten, und/oder die Behälteröffnung und die Beschichter-Ausgabeöffnung in einer Draufsicht oder Untersicht des Beschichters überlappend zueinander positionierbar sind.

Gemäß verschiedenen Ausführungsformen kann zum Beispiel vorgesehen sein, dass für ein Dosieren des Austrags, durch ein Bewegen des Behälters relativ zu der Beschichter-Ausgabeöffnung, ein Überlappungsgrad der Behälteröffnung und der Beschichter-Ausgabeöffnung in einer Draufsicht oder Untersicht des Beschichters selektiv einstellbar bzw. veränderbar ist.

Gemäß verschiedenen Ausführungsformen kann zum Beispiel vorgesehen sein, dass die Behälteröffnung über der Beschichter-Ausgabeöffnung angeordnet ist und/oder dass die Behälteröffnung an einem unteren Abschnitt des Behälters vorgesehen ist und/oder dass der Behälter langgestreckt ist und/oder dass die Behälteröffnung eine langgestreckte Schlitzform hat und/oder dass eine Längsachse der Behälteröffnung bzw. des Schlitzes sich in einer horizontalen Richtung erstreckt, die senkrecht zu einer Richtung ist, in der der Beschichter verfahrbar ist (siehe unten) und/oder dass die Beschichter-Ausgabeöffnung eine langgestreckte Schlitzform hat und/oder dass eine Längsachse der Beschichter-Ausgabeöffnung bzw. des Schlitzes sich in einer horizontalen Richtung erstreckt, die senkrecht zu einer Richtung ist, in der der Beschichter verfahrbar ist, und/oder dass die Behälteröffnung und die Beschichter-Ausgabeöffnung im Wesentlichen die gleiche Länge und/oder im Wesentlichen die gleiche Breite haben und/oder dass die Beschichter-Ausgabeöffnung nach unten ausgerichtet ist und/oder zu dem Baufeld hin ausgerichtet ist.

Gemäß verschiedenen Ausführungsformen kann der Behälter zum Beispiel relativ zu der Beschichter-Ausgabeöffnung schwenkbar sein. Dies ist eine Möglichkeit, um den Behälter relativ zu der Beschichter-Ausgabeöffnung zu bewegen, die sich in der Praxis bewährt hat. Eine andere Möglichkeit wäre zum Beispiel eine lineare Bewegung des Behälters relativ zu der Beschichter-Ausgabeöffnung, zum Beispiel eine horizontale, lineare Bewegung. Die Schwenkbewegung erfolgt zum Beispiel um eine eigene Schwenkachse, d.h. in Form einer Eigenrotation. Die Schwenkachse kann innerhalb des Behälters und/oder parallel zu dessen Längsachse angeordnet sein. Die Beschichteranordnung kann einen entsprechenden (ersten) Schwenkantrieb aufweisen, mit dem der Behälter relativ zu der Beschichter-Ausgabeöffnung schwenkbar ist. Die Beschichteranordnung kann eine Steuervorrichtung aufweisen, die mit dem (ersten) Schwenkantrieb kommuniziert. Die Behälteröffnung kann also infolge der Bewegung des Behälters auf einer Kreisbahn bzw. entlang eines Kreisbogens bewegt werden.

Gemäß verschiedenen Ausführungsformen kann der Ausgabebereich zum Beispiel mindestens ein Streichelement aufweisen, das eingerichtet ist, um aus der Beschichter-Ausgabeöffnung ausgegebenes Baumaterial zu überstreichen, um dadurch das ausgegebene Partikelmaterial zu nivellieren und/oder zu verdichten, wobei der Behälter relativ zu dem mindestens einen Streichelement bewegbar ist. Das mindestens eine Streichelement kann in Querrichtung auf einer Seite der Beschichter-Ausgabeöffnung angeordnet sein und die Beschichter-Ausgabeöffnung zum Beispiel auf dieser Seite begrenzen. Zum Beispiel können zwei Streichelemente auf in Querrichtung gegenüberliegenden Seiten vorgesehen sein (zum Beispiel im Fall eines bidirektionalen Beschichters) und die Beschichter-Ausgabeöffnung zum Beispiel in Querrichtung auf den gegenüberliegenden Seiten begrenzen. Das mindestens eine Streichelement kann zum Beispiel langgestreckt sein und/oder streifenförmig ausgebildet sein und/oder aus Keramik oder Metall (zum Beispiel Stahl) gefertigt sein und/oder eine plane Streichfläche aufweisen, die nach unten ausgerichtet ist bzw. dem Baufeld zugewandt ist. Das (jeweilige) Streichelement kann zum Beispiel in Form einer sogenannten Streichleiste und/oder Streichklinge ausgebildet sein. Zwei Streichelemente können zum Beispiel parallel zueinander angeordnet sein.

Gemäß verschiedenen Ausführungsformen kann der Beschichter zum Beispiel ferner eine Trägerstruktur aufweisen, an welcher das mindestens eine Streichelement angebracht ist, zum Beispiel starr angebracht ist. Das Streichelement kann zum Beispiel separat zu dem Behälter und/oder rüttelbewegungsentkoppelt zu dem Behälter an der Trägerstruktur angebracht sein. Das Streichelement kann zum Beispiel auch von der Trägerstruktur selbst ausgebildet sein, zum Beispiel von einem unteren Abschnitt davon.

Die Trägerstruktur kann zum Beispiel langgestreckt sein und sich zum Beispiel in einer horizontalen Richtung erstrecken, die senkrecht zu einer Richtung ist, in der der Beschichter verfahrbar ist (siehe unten). Die Trägerstruktur kann zum Beispiel einen oder mehrere Träger aufweisen, die sich mit ihrer Längsachse in der horizontalen Richtung erstrecken, die senkrecht zu der Richtung ist, in der der Beschichter verfahrbar ist. Zwei Träger können zum Beispiel parallel zueinander angeordnet sein.

Gemäß verschiedenen Ausführungsformen kann die Beschichteranordnung zum Beispiel ferner einen Lagerbock aufweisen, an dem die Trägerstruktur schwenkbar angebracht ist, so dass die Trägerstruktur und das daran angebrachte, mindestens eine Streichelement relativ zu dem Lagerbock schwenkbar sind, um einen Anstellwinkel des mindestens einen Streichelements einzustellen (zum Beispiel einen Winkel zwischen einer Streichfläche des Streichelements und einer imaginären, horizontalen Linie oder einen Winkel zwischen der Streichfläche des Streichelements und dem Baufeld). Die Beschichteranordnung kann einen entsprechenden (zweiten) Schwenkantrieb aufweisen, mit dem die Trägerstruktur samt Streichelement(en) relativ zu dem Lagerbock schwenkbar ist. Die Beschichteranordnung kann eine Steuervorrichtung aufweisen, die mit dem (zweiten) Schwenkantrieb kommuniziert. Beispielsweise können zwei Lagerböcke bereitgestellt sein, zwischen denen die Trägerstruktur in Längsrichtung gelagert ist.

Gemäß verschiedenen Ausführungsformen kann der Behälter zum Beispiel schwenkbar an der Trägerstruktur angebracht sein.

Gemäß verschiedenen Ausführungsformen kann die Beschichteranordnung zum Beispiel ferner eine Führungsstruktur und einen (dritten) Antrieb aufweisen, mit denen der Beschichter über das Baufeld hinweg bewegbar ist, zum Beispiel horizontal und/oder linear. Hierzu kann zum Beispiel der oben beschriebene Lagerbock an der Führungsstruktur angebracht werden, zum Beispiel an einem Führungsschlitten der Führungsstruktur. Die Beschichteranordnung kann eine Steuervorrichtung aufweisen, die mit dem (dritten) Antrieb kommuniziert.

Gemäß verschiedenen Ausführungsformen weist die Beschichteranordnung eine Vibrationsvorrichtung auf, aufweisend einen Vibrationsantrieb, mit der/dem in dem Behälter aufgenommenes, partikelförmiges Baumaterial in Vibration versetzbar ist. Hierdurch kann das Fließ- bzw. Rieselverhalten des partikelförmigen Baumaterials bzw. der Austrag des partikelförmigen Baumaterials aus dem Ausgabebereich beeinflusst werden. Die Beschichteranordnung kann eine Steuervorrichtung aufweisen, die mit dem Vibrationsantrieb kommuniziert.

Der Behälter kann gemäß verschiedenen Ausführungsformen langgestreckt sein, wobei zum Beispiel der Vibrationsantrieb an einem ersten Längsende des Behälters vorgesehen sein kann und ein Antrieb zum Bewegen des Behälters relativ zu der Beschichter-Ausgabeöffnung (zum Beispiel der obige erste Schwenkantrieb) an einem zweiten Längsende des Behälters vorgesehen sein kann.

Der Behälter ist gemäß verschiedenen Ausführungsformen relativ zu der Beschichter-Ausgabeöffnung um eine Schwenkachse schwenkbar, wobei der Vibrationsantrieb die Schwenkachse des Behälters in axialer Richtung anregt, zum Beispiel in axialer Richtung "rüttelbewegt" oder "hin und her bewegt". Durch die Anregung der Schwenkachse kann das Fließ- bzw. Rieselverhalten des partikelförmigen Baumaterials bzw. der Austrag des partikelförmigen Baumaterials aus dem Ausgabebereich auf einfache und kompakte Weise beeinflusst werden. Ein (unmittelbares) Rütteln an den Wandabschnitten des Behälters ist nicht erforderlich.

Gemäß verschiedenen Ausführungsformen kann zum Beispiel
eine Außenwand des Behälters im Querschnitt eine sich nach unten hin verjüngende Form haben und/oder
eine Außenwand des Behälters im Querschnitt eine Kreisbogenform haben und/oder
eine Außenwand des Behälters im Querschnitt eine Wannenform haben und/oder
der Behälter nach oben hin offen ausgebildet sein und/oder
der Behälter länglich ausgebildet sein, wobei sich die Längsachse zum Beispiel in der horizontalen Richtung erstreckt, die senkrecht zu der Richtung ist, in der der Beschichter verfahrbar ist.

Gemäß verschiedenen Ausführungsformen kann zum Beispiel der Behälter langgestreckt sein, wobei zum Beispiel in Längsrichtung des Behälters ein oder mehrere Querstege vorgesehen sind. Die Querstege können in Querrichtung gegenüberliegende Außenwandabschnitte des Behälters miteinander verbinden. Hierdurch kann eine Übertragung der Vibration auf das Partikelmaterial verbessert werden.

Gemäß verschiedenen Ausführungsformen kann zum Beispiel der Beschichter ferner einen Vorlagebehälter aufweisen, der eingerichtet ist, um den Behälter mit partikelförmigem Baumaterial zu speisen, wobei der Behälter zum Beispiel relativ zu dem Vorlagebehälter bewegbar ist. Der Vorlagebehälter kann zum Beispiel über dem Behälter angeordnet sein und/oder starr an der Trägerstruktur angebracht sein und/oder eine Verteilervorrichtung, wie zum Beispiel eine Förderschnecke, in sich aufnehmen und/oder nach oben hin offen ausgebildet sein, um in einer Befüllungsstation (zum Beispiel aufweisend eine Beschickungseinheit) des 3D-Druckers selbst mit frischem Baumaterial befüllt werden zu können.

Gemäß verschiedenen Ausführungsformen kann zum Beispiel die Beschichteranordnung ferner eine Steuereinheit aufweisen, die eingerichtet ist, um den Behälter mittels eines Antriebs (zum Beispiel mittels des obigen, ersten Schwenkantriebs) relativ zu der Beschichter-Ausgabeöffnung zu bewegen, um dadurch den Austrag an partikelförmigem Baumaterial zu variieren. Die Steuereinheit kann zum Beispiel die Steuervorrichtung des ersten Schwenkantriebs und/oder die Steuervorrichtung des zweiten Schwenkantriebs und/oder die Steuervorrichtung des dritten Antriebs und/oder die Steuervorrichtung des Vibrationsantriebs aufweisen.

Gemäß verschiedenen Ausführungsformen kann zum Beispiel ein 3D-Drucker bereitgestellt sein, der eine wie oben beschriebene Beschichteranordnung aufweist. Zum Beispiel kann der 3D-Drucker ferner aufweisen:
eine Druckvorrichtung zum selektiven, gesteuerten Ausgeben von Behandlungsmittel, die eingerichtet ist, um vorbestimmte Bereiche einer zuvor aufgebrachten Schicht aus Baumaterial mit Behandlungsmittel zu bedrucken (das mittels der Druckvorrichtung ausgegebene Behandlungsmittel trägt zu einer selektiven Verfestigung bei und kann zum Beispiel eine Bindemittelkomponente eines Mehrkomponentenbindemittels sein, wobei eine weitere Bindemittelkomponente in dem Baumaterial enthalten oder diesem zugegeben wird); und/oder
eine in den 3D-Drucker integrierte Beschickungseinheit, mit der Baumaterial frisch zubereitbar und in den Beschichter zuführbar ist, und/oder
ein oder mehrere Bauplattformen und/oder Bauboxen, die ein jeweiliges Baufeld definieren.

Die Druckvorrichtung kann zum Beispiel horizontal verfahrbar sein, zum Beispiel in einer Richtung senkrecht zu der Richtung, in der der mindestens eine Beschichter verfahrbar ist. Die Druckvorrichtung kann zum Beispiel eingerichtet sein, um mehrere Baufelder zu bedienen. Die Druckvorrichtung kann zum Beispiel zusätzlich in der Richtung verfahrbar sein, in der auch der mindestens eine Beschichter verfahrbar ist, so dass sie das oder die Baufelder mäanderförmig abfahren kann, zum Beispiel in einer U-Form.

Alternativ kann eine jeweilige Baumaterialschicht zum Beispiel mit einem Laser selektiv verfestigt, zum Beispiel gesintert, werden (sogenanntes "selektives Lasersintern").

Die mindestens eine Baubox kann zum Beispiel eine höhenverstellbare Bauplattform aufnehmen, die während des generativen Herstellungsverfahrens (bzw. während eines sogenannten "Baujobs") schrittweise abgesenkt wird. Der Antrieb für die Höhenverstellung kann zum Beispiel entweder direkt in die Baubox ("mitfahrend") oder zum Beispiel stationär ("anlagenfest") in dem 3D-Drucker vorgesehen sein. Die Baubox kann zum Beispiel aus dem 3D-Drucker heraus und in diesen hinein verfahrbar sein, zum Beispiel über eine Rollenbahn und/oder über einen eigenen, in die Baubox integrierten Fahrantrieb. Die Baubox kann zum Beispiel wie eingangs beschrieben ausgebildet sein, zum Beispiel wie in DE 10 2009 056 696 A1 beschrieben.

Unter partikelförmigem Baumaterial kann im Sinne dieser Erfindung ein Baumaterial verstanden werden, welches zumindest eine Art von Partikelmaterial (zum Beispiel Sand(körner), zum Beispiel Gießereisand, und/oder Metallpartikel und/oder Kunststoffpartikel) aufweist. Es können auch mehrere unterschiedliche Arten von Partikelmaterial in dem Baumaterial enthalten sein, zum Beispiel ein Gemisch aus neuem Sand und recyceltem Sand oder ein Gemisch aus feinem Sand und grobem Sand oder ein Gemisch aus zwei unterschiedlichen Sandtypen. Das Baumaterial kann ferner zumindest eine flüssige Komponente aufweisen, zum Beispiel eine Bindemittel-Komponente, zum Beispiel einen Aktivator, und/oder einen oder mehrere feste und/oder flüssige Zuschlagstoffe. In dem Fall, dass das Baumaterial eine Bindemittel-Komponente enthält, kann zum Beispiel eine weitere Bindemittel-Komponente, zum Beispiel Furanharz, mittels einer Druckvorrichtung selektiv auf eine zuvor aufgebrachte Baumaterial-Schicht aufgedruckt werden, um diese in einem vorbestimmten Bereich zu verfestigen. Je nach herzustellendem Bauteil, zum Beispiel eine Gussform oder ein Gießkern, kann eine speziell dafür zubereitete Baumaterial-Zusammensetzung eingesetzt werden. Die Baumaterial-Zusammensetzung kann dabei definiert werden durch die Anzahl an eingesetzten Komponenten sowie die jeweilige Art und den jeweiligen Anteil der in dem Baumaterial(gemisch) enthaltenen Komponenten. Das Riesel- bzw. Fließverhalten des Baumaterials kann dabei je nach Baumaterial-Zusammensetzung variieren.

Beispielgebende, aber nicht einschränkende Ausführungsformen der Erfindung sind in den Figuren dargestellt und werden im Folgenden näher erläutert.

Es zeigen:
Figur 1 eine Perspektivansicht einer Beschichteranordnung gemäß einer ersten Ausführungsform der Erfindung.
Figur 2 eine Perspektivansicht des (isolierten) Behälters der Beschichteranordnung aus Figur 1.
Die Figuren 3(a) bis 3(c) verschiedene Querschnittsansichten der Beschichteranordnung aus Figur 1, wobei Figur 3(a) eine geöffnete/freigegebene Beschichter-Ausgabeöffnung zeigt, wobei Figur 3(c) eine geschlossene Beschichter-Ausgabeöffnung zeigt und wobei Figur 3(b) ein Dosieren von partikelförmigem Baumaterial aus der Beschichter-Ausgabeöffnung zeigt.
Figur 4 eine Querschnittsansicht einer Beschichteranordnung gemäß einer zweiten Ausführungsform der Erfindung.
Figur 5 eine Stirnseitenansicht der Beschichteranordnung aus Figur 4.
Figur 6 eine Perspektivansicht der Beschichteranordnung aus Figur 4.

In der folgenden ausführlichen Beschreibung wird auf die beigefügten Figuren Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung können Begriffe wie "verbunden", "angeschlossen" sowie "gekoppelt" verwendet werden zum Beschreiben sowohl einer direkten als auch einer indirekten Verbindung, eines direkten oder indirekten Anschlusses sowie einer direkten oder indirekten Kopplung.

In den Figuren werden identische oder ähnliche Elemente mit identischen Bezugszeichen versehen, soweit dies zweckmäßig ist.

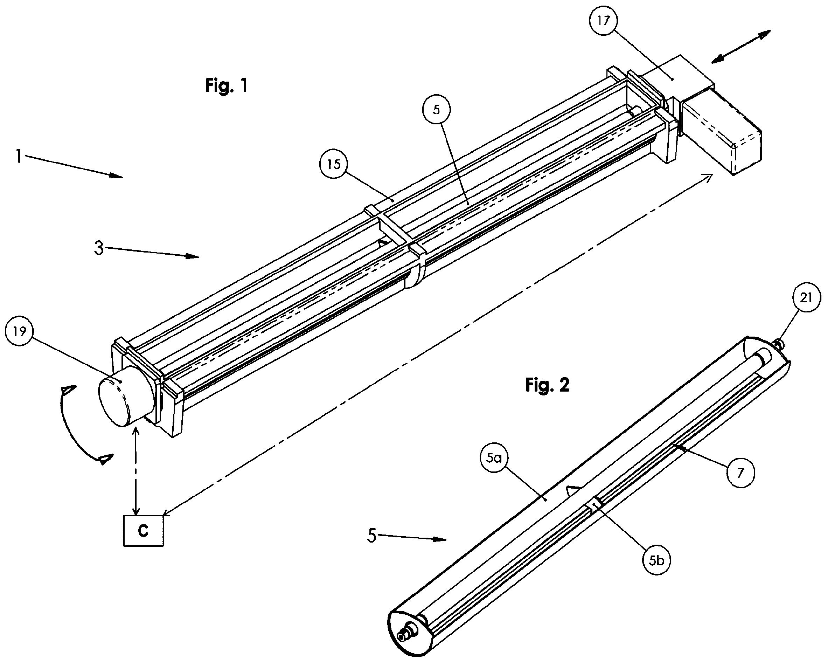

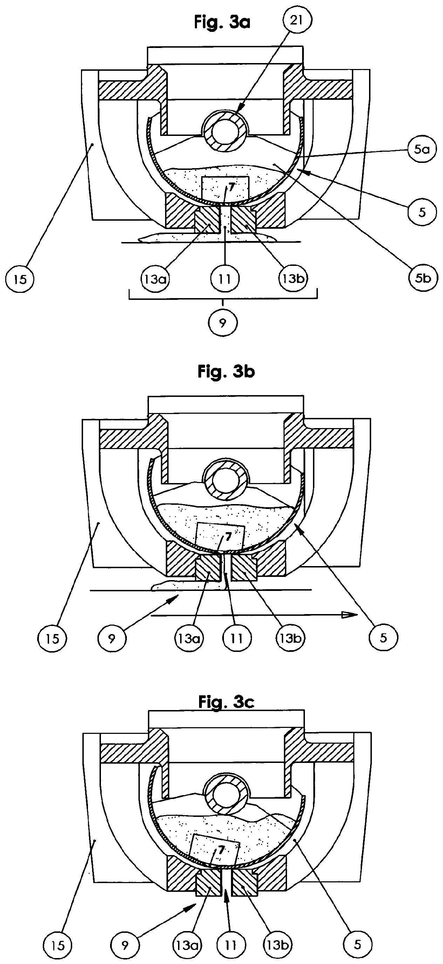

Die Figuren 1 bis 3 zeigen eine Beschichteranordnung 1 gemäß einer ersten Ausführungsform der Erfindung. Die Beschichteranordnung 1 kann in einem 3D-Drucker verwendet werden und weist einen Beschichter 3 auf, der einen Behälter 5, der einen inneren Hohlraum zur Aufnahme von partikelförmigem Baumaterial definiert, der in einer Behälteröffnung 7 zum Ausgeben des partikelförmigen Baumaterials aus dem Behälter mündet, und einen Ausgabebereich 9 hat, der eine Beschichter-Ausgabeöffnung 11 zum Ausgeben des partikelförmigen Baumaterials aus dem Beschichter auf ein Baufeld definiert. Der Behälter 5 ist relativ zu der Beschichter-Ausgabeöffnung 11 bewegbar, so dass durch ein Bewegen des Behälters relativ zu der Beschichter-Ausgabeöffnung ein Austrag an partikelförmigem Baumaterial aus dem inneren Hohlraum durch die Behälteröffnung und die Beschichter-Ausgabeöffnung hindurch auf das Baufeld variierbar ist. Letzteres ist insbesondere aus einem Vergleich der Figuren 3a) bis 3c) ersichtlich. Das Baufeld ist in den Figuren 3a) bis 3c) dabei als horizontaler Strich angedeutet. Der nach rechts deutende Pfeil in Figur 3b) zeigt die Beschichtungsrichtung an bzw. die Fahrtrichtung des Beschichters.

Wie in Figur 3b) angedeutet, kann durch ein Bewegen des Behälters relativ zu der Beschichter-Ausgabeöffnung (hier beispielgebend durch ein Schwenken des Behälters) der Austrag an partikelförmigem Baumaterial dosiert werden, d.h. der Menge nach eingestellt werden. Es versteht sich, dass weitere "Dosierstellungen" des Behälters denkbar bzw. einstellbar sind, in denen eine andere, dosierte Menge ausgebbar ist.

Wie in Figur 3c) angedeutet, kann zudem durch ein Bewegen des Behälters relativ zu der Beschichter-Ausgabeöffnung der Austrag an partikelförmigem Baumaterial unterbunden werden bzw. der Beschichter selektiv verschlossen werden.

Wie in Figur 3a) angedeutet, kann des Weiteren durch ein Bewegen des Behälters relativ zu der Beschichter-Ausgabeöffnung der Austrag an partikelförmigem Baumaterial auf maximal gestellt werden, indem die Beschichter-Ausgabeöffnung 11 und die Behälteröffnung 7 derart zueinander ausgerichtet werden, dass sie vollständig miteinander fluchten.

Die Beschichter-Ausgabeöffnung 11 und die Behälteröffnung 7 kommunizieren also miteinander für den Zweck des Ausgebens von partikelförmigem Baumaterial, und ein Ausmaß der Kommunikation bzw. ein Kommunikationspfad zwischen den beiden Öffnungen ist durch Bewegen des Behälters relativ zu der Beschichter-Ausgabeöffnung selektiv einstellbar.

In Figur 3c ist der Behälter 5 relativ zu der Beschichter-Ausgabeöffnung 11 bzw. weg von der Beschichter-Ausgabeöffnung 11 in eine Position geschwenkt, in welcher aus der Behälteröffnung 7 austretendes/ausrieselndes Baumaterial sich totläuft, bevor es die Beschichter-Ausgabeöffnung 11 erreicht, d.h. ausrieselndes Baumaterial bildet einen Schüttkegel aus, der vor der Beschichter-Ausgabeöffnung zu erliegen kommt.

In der in Figur 3c gezeigten Behälterstellung tritt in einer Draufsicht oder Untersicht des Beschichters keine Überlappung zwischen den beiden Öffnungen 7, 11 auf. Hingegen sind in den Figuren 3a und 3b die Behälteröffnung 7 und die Beschichter-Ausgabeöffnung 11 in einer Draufsicht oder Untersicht des Beschichters jeweils überlappend zueinander angeordnet, wobei ein Überlappungsgrad in Figur 3a) maximal ist und größer ist als der in Figur 3b). In Figur 3a) ist dabei ein vollständiges fluchten der beiden Öffnungen gezeigt. Weitere Überlappungsgrade/Überlappungsmuster sind denkbar bzw. einstellbar.

Wie in den Figuren 3a) bis 3c) gezeigt, ist die Behälteröffnung 7 über der Beschichter-Ausgabeöffnung 11 angeordnet und an einem unteren Abschnitt des Behälters 5 vorgesehen.

Wie in Figur 2 gezeigt, ist der Behälter 5 langgestreckt, und hat die Behälteröffnung 7 eine langgestreckte Schlitzform. Die Längsachse der Behälteröffnung 7 bzw. des Schlitzes erstreckt sich in einer horizontalen Richtung, die senkrecht zu einer Richtung ist, in der der Beschichter über ein Baufeld verfahrbar ist.

In analoger Weise kann die Beschichter-Ausgabeöffnung 11 eine langgestreckte Schlitzform haben, wobei eine Längsachse der Beschichter-Ausgabeöffnung 11 bzw. des Schlitzes sich in der horizontalen Richtung erstreckt, die senkrecht zu der Richtung ist, in der der Beschichter verfahrbar ist. Wie in Figur 3b) gezeigt, ist die Beschichter-Ausgabeöffnung 11 nach unten ausgerichtet und dem Baufeld zugewandt.

Die Behälteröffnung 9 und die Beschichter-Ausgabeöffnung 11 können im Wesentlichen die gleiche Länge und/oder die gleiche Breite haben.

Wie in den Figuren 3a) bis 3c) angedeutet, kann der Behälter relativ zu der Beschichter-Ausgabeöffnung geschwenkt werden. Die Schwenkbewegung erfolgt hier um eine eigene Schwenkachse 21. Die Schwenkachse 21 ist innerhalb des Behälters 5 und parallel zu dessen Längsachse angeordnet. Die Beschichteranordnung 1 weist einen (ersten) Schwenkantrieb 19 auf, mit dem der Behälter 5 relativ zu der Beschichter-Ausgabeöffnung 11 schwenkbar ist.

Die Beschichteranordnung 1 kann eine Steuereinheit C aufweisen, die mit dem (ersten) Schwenkantrieb 19 kommuniziert, wie in Figur 1 veranschaulicht.

Wie in den Figuren 3a) bis 3c) gezeigt, weist der Ausgabebereich 9 hier zwei Streichelemente 13a, 13b auf, die eingerichtet sind, um aus der Beschichter-Ausgabeöffnung 11 ausgegebenes Baumaterial zu überstreichen, um dadurch das ausgegebene Partikelmaterial zu nivellieren und/oder zu verdichten. Die zwei Streichelemente sind auf in Querrichtung gegenüberliegenden Seiten der Beschichter-Ausgabeöffnung 11 vorgesehen, begrenzen die Beschichter-Ausgabeöffnung in Querrichtung auf den gegenüberliegenden Seiten und ermöglichen einen sog. bidirektionalen Betrieb des Beschichters 3. Es kann zum Beispiel vorgesehen sein, dass bei dem bidirektionalen Betrieb des Beschichters 3 im Wesentlichen jeweils nur das in Fahrtrichtung hinten gelegene Streichelement "aktiv" ist. Wie gezeigt, ist der Behälter 5 relativ zu den Streichelementen bewegbar.

Wie zum Beispiel Figur 3a) zu entnehmen ist, hat jedes Streichelement eine plane Streichfläche, die nach unten ausgerichtet ist bzw. dem Baufeld zugewandt ist.

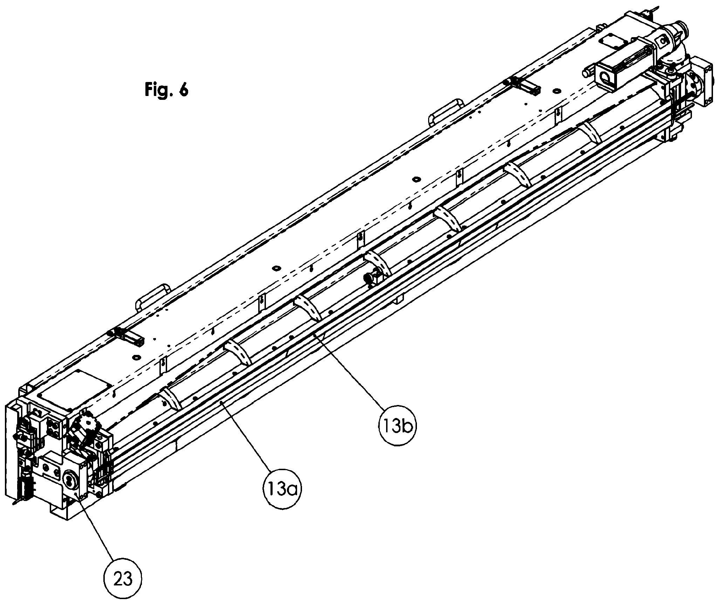

Wie in Figur 6 für die zweite Ausführungsform angedeutet, können die beiden Streichelemente 13a, 13b auch in der ersten Ausführungsform langgestreckt und streifenförmig ausgebildet sein. Sie können zum Beispiel aus Keramik oder Metall (zum Beispiel Stahl) gefertigt sein. Das jeweilige Streichelement 13a, 13b kann zum Beispiel in Form einer sogenannten Streichleiste und/oder Streichklinge ausgebildet sein.

Wie in den Figuren 1, 3a) bis 3c) gezeigt, kann der Beschichter ferner eine Trägerstruktur 15 aufweisen, an welcher die beiden Streichelemente 13a, 13b starr angebracht sind. Die Trägerstruktur 15 ist langgestreckt und erstreckt sich in einer horizontalen Richtung, die senkrecht zu einer Richtung ist, in der der Beschichter verfahrbar ist. Die Trägerstruktur kann zum Beispiel wie in den Figuren angedeutet zwei parallele Träger aufweisen, die sich mit ihrer Längsachse in der horizontalen Richtung erstrecken, die senkrecht zu der Richtung ist, in der der Beschichter verfahrbar ist.

Die Beschichteranordnung 1 weist einen Vibrationsantrieb 17 auf, mit dem in dem Behälter 5 aufgenommenes, partikelförmiges Baumaterial in Vibration versetzbar ist, um das Fließ- bzw. Rieselverhalten des partikelförmigen Baumaterials zu verbessern. Gemäß der vorliegenden Ausführungsform kann der Vibrationsantrieb 17 an einem ersten Längsende des langgestreckten Behälters vorgesehen sein, und kann der Antrieb 19 zum Bewegen/Schwenken des Behälters an einem zweiten Längsende des Behälters vorgesehen sein. Im vorliegenden Fall regt der Vibrationsantrieb 17 dabei die Schwenkachse 21 des Behälters in axialer Richtung an, anders als im eingangs erwähnten Stand der Technik, der an einem Wandabschnitt des Behälters rüttelt.

Die Streichelemente 13a, 13b sind separat zu dem Behälter 5 und rüttelbewegungsentkoppelt zu der Vibration des Baumaterials in dem Behälter 5 an der Trägerstruktur 15 angebracht.

Wie ferner in den Figuren 3a) bis 3c) verdeutlicht, kann zum Beispiel eine Außenwand 5a des Behälters 5 im Querschnitt eine sich nach unten hin verjüngende Form haben und/oder im Querschnitt eine Kreisbogenform haben und/oder im Querschnitt eine Wannenform haben. Außerdem kann der Behälter 5 nach oben hin offen ausgebildet sein und/oder länglich ausgebildet sein, wobei sich die Längsachse zum Beispiel in der horizontalen Richtung erstreckt, die senkrecht zu der Richtung ist, in der der Beschichter verfahrbar ist.

Wie in Figur 2 gezeigt, können in Längsrichtung des Behälters 5 ein oder mehrere Querstege 5b vorgesehen sein (hier beispielgebend ein Quersteg zwischen dem in Längsrichtung vorderen Außenwandabschnitt und hinteren Außenwandabschnitt des Behälters 5). Der Quersteg 5b verbindet in Querrichtung gegenüberliegende, seitliche Außenwandabschnitte des Behälters 5 miteinander. Hierdurch kann eine Übertragung der Vibration auf das Partikelmaterial verbessert werden.

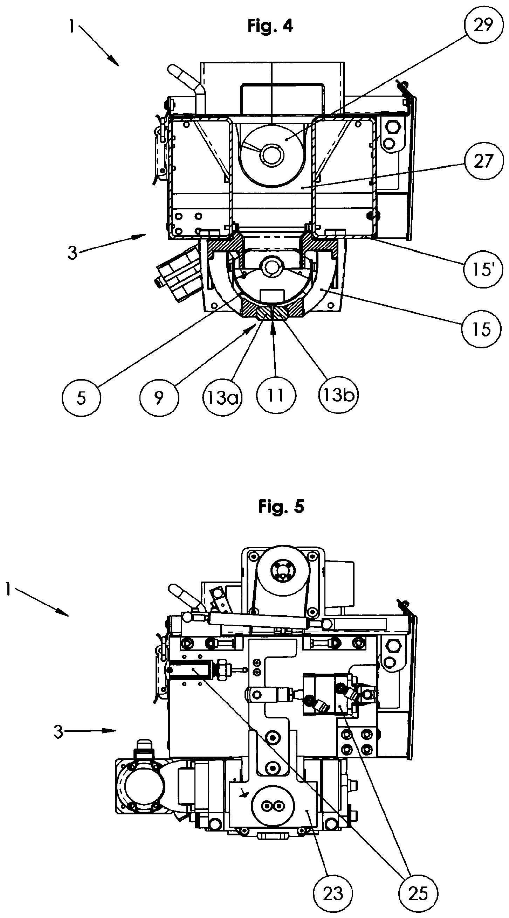

Die Figuren 4 bis 6 zeigen eine Beschichteranordnung 1 gemäß einer zweiten Ausführungsform.

Gleiche oder ähnliche Merkmale wie in der ersten Ausführungsform sind mit den gleichen Bezugszeichen versehen, und auf eine erneute Beschreibung dieser Merkmale wird verzichtet. Stattdessen werden hauptsächlich Merkmale beschrieben, die in der zweiten Ausführungsform zusätzlich vorgesehen sind.

Die Beschichteranordnung 1 gemäß der zweiten Ausführungsform weist einen Lagerbock 23 auf, an dem die Trägerstruktur 15 schwenkbar angebracht ist, so dass die Trägerstruktur 15 und die Streichelemente 13a, 13b relativ zu dem Lagerbock 23 schwenkbar sind, um einen Anstellwinkel der Streichelemente einzustellen, zum Beispiel einen Winkel zwischen einer Streichfläche eines der Streichelemente und einer imaginären, horizontalen Linie oder einen Winkel zwischen der Streichfläche und dem Baufeld. Es kann auch an jedem Längsende ein Lagerbock, also insgesamt zwei Lagerböcke vorgesehen sein.

Die Beschichteranordnung 1 kann einen entsprechenden (zweiten) Schwenkantrieb 25 aufweisen, mit dem die Trägerstruktur 15 samt den Streichelementen 13a, 13b relativ zu dem Lagerbock 23 schwenkbar ist. Hier weist der zweite Schwenkantrieb 25 beispielgebend einen hydraulischen Antrieb auf, der zwischen Lagerbock 23 und Trägerstruktur 15, 15' angebracht ist, sowie einen Anschlag, der variabel einstellbar ist.

Die Trägerstruktur weist gemäß der zweiten Ausführungsform einen oberen Teil 15' sowie einen unteren Teil 15 auf, der wie für die erste Ausführungsform gezeigt ausgebildet ist und der starr mit dem oberen Teil 15' verbunden ist.

Die oben erwähnte Steuereinheit C kann zusätzlich mit dem (zweiten) Schwenkantrieb 25 kommunizieren.

Gemäß dieser Ausführungsformen ist also der Beschichter 3 bzw. die Trägerstruktur 15, 15' schwenkbar an dem Lagerbock 23 und der Behälter 5 wiederum schwenkbar an der Trägerstruktur 15, 15' angebracht/angeschlossen.

Gemäß verschiedenen Ausführungsformen kann die Beschichteranordnung 1 ferner eine (nicht gezeigte) Führungsstruktur und einen nicht gezeigten (dritten) Antrieb aufweisen, mit denen der Beschichter 3 über das Baufeld hinweg bewegbar ist, zum Beispiel horizontal und/oder linear. Dies gilt analog für die erste Ausführungsform.

Hierzu kann zum Beispiel in der zweiten Ausführungsform der oben beschriebene Lagerbock 23 an der Führungsstruktur angebracht sein, zum Beispiel über einen (nicht gezeigten) Führungsschlitten. Die Steuereinheit kann mit dem (dritten) Antrieb kommunizieren.

Gemäß der zweiten Ausführungsformen kann der Beschichter 3 ferner einen Vorlagebehälter 27 aufweisen, der eingerichtet ist, um den Behälter 5 mit partikelförmigem Baumaterial zu speisen. Der Behälter 5 ist hier auch relativ zu dem Vorlagebehälter 27 bewegbar. Der Vorlagebehälter 27 ist über dem Behälter 5 angeordnet sein und starr an der Trägerstruktur 15' angebracht bzw. von dieser mitausgebildet. In dem Vorlagebehälter 27 ist eine Verteilervorrichtung 29 aufgenommen, wie zum Beispiel eine Förderschnecke. Der Vorlagebehälter 27 kann nach oben hin offen ausgebildet sein, um in einer Befüllungsstation (nicht gezeigt) eines 3D-Druckers selbst mit frischem Baumaterial befüllt werden zu können.

Die Beschichteranordnung gemäß der ersten oder der zweiten Ausführungsform kann zum Beispiel in einem 3D-Drucker eingesetzt werden. Ein solcher 3D-Drucker kann ferner aufweisen:
eine Druckvorrichtung zum selektiven, gesteuerten Ausgeben von Behandlungsmittel (zum Beispiel Binder-Jetting-Vorrichtung); und/oder
eine in den 3D-Drucker integrierte Beschickungseinheit, mit der Baumaterial frisch zubereitbar und in den Beschichter zuführbar ist, und/oder
ein oder mehrere Bauplattformen und/oder Bauboxen, die ein jeweiliges Baufeld definieren.

## Patentansprüche

1. Beschichteranordnung (1) für einen 3D-Drucker, aufweisend:
einen Beschichter (3) mit
einem Behälter (5), der einen inneren Hohlraum zur Aufnahme von partikelförmigem Baumaterial definiert, der in einer Behälteröffnung (7) zum Ausgeben des partikelförmigen Baumaterials aus dem Behälter (5) mündet, und
einem Ausgabebereich (9), der eine Beschichter-Ausgabeöffnung (11) zum Ausgeben des partikelförmigen Baumaterials aus dem Beschichter (3) auf ein Baufeld definiert,
wobei der Behälter (5) relativ zu der Beschichter-Ausgabeöffnung (11) bewegbar ist, so dass durch ein Bewegen des Behälters (5) relativ zu der Beschichter-Ausgabeöffnung (11) ein Austrag an partikelförmigem Baumaterial aus dem inneren Hohlraum durch die Behälteröffnung (7) und die Beschichter-Ausgabeöffnung (11) hindurch auf das Baufeld variierbar ist,
wobei die Beschichteranordnung (1) ferner
eine Vibrationsvorrichtung, aufweisend einen Vibrationsantrieb (17), mit der/dem in dem Behälter aufgenommenes, partikelförmiges Baumaterial in Vibration versetzbar ist, aufweist,
und wobei der Behälter (5) relativ zu der Beschichter-Ausgabeöffnung (11) um eine Schwenkachse (21) schwenkbar ist,
**dadurch gekennzeichnet, dass**
der Vibrationsantrieb (17) die Schwenkachse (21) des Behälters (5) in axialer Richtung anregt.

2. Beschichteranordnung (1) nach Anspruch 1, wobei
durch ein Bewegen des Behälters (5) relativ zu der Beschichter-Ausgabeöffnung (11) der Austrag an partikelförmigem Baumaterial dosierbar ist.

3. Beschichteranordnung (1) nach Anspruch 1 oder 2, wobei
durch ein Bewegen des Behälters (5) relativ zu der Beschichter-Ausgabeöffnung (11) der Austrag an partikelförmigem Baumaterial unterbindbar ist.

4. Beschichteranordnung (1) nach einem der Ansprüche 1 bis 3, wobei
der Behälter (5) relativ zu der Beschichter-Ausgabeöffnung (11) schwenkbar ist.

5. Beschichteranordnung (1) nach einem der Ansprüche 1 bis 4, wobei
der Ausgabebereich (9) mindestens ein Streichelement (13a) aufweist, das eingerichtet ist, um aus der Beschichter-Ausgabeöffnung (11) ausgegebenes Baumaterial zu überstreichen, um dadurch das ausgegebene Partikelmaterial zu nivellieren und/oder zu verdichten, und
der Behälter (5) relativ zu dem mindestens einen Streichelement (13a) bewegbar ist.

6. Beschichteranordnung (1) nach Anspruch 5, wobei
der Beschichter (3) ferner eine Trägerstruktur (15) aufweist, an welcher das mindestens eine Streichelement (13a) angebracht ist, zum Beispiel starr angebracht.

7. Beschichteranordnung (1) nach Anspruch 6, ferner aufweisend
einen Lagerbock (23), an dem die Trägerstruktur (15) schwenkbar angebracht ist, so dass die Trägerstruktur (15) und das daran angebrachte, mindestens eine Streichelement (13a) relativ zu dem Lagerbock (23) schwenkbar sind, um einen Anstellwinkel des mindestens einen Streichelements (13a) einzustellen.

8. Beschichteranordnung (1) nach Anspruch 6 oder 7, wobei der Behälter (5) schwenkbar an der Trägerstruktur (15) angebracht ist.

9. Beschichteranordnung (1) nach einem der vorangehenden Ansprüche, ferner aufweisend
eine Führungsstruktur und einen Antrieb, mit denen der Beschichter (3) über das Baufeld hinweg bewegbar ist, zum Beispiel horizontal und/oder linear.

10. Beschichteranordnung (1) nach einem der vorangehenden Ansprüche, wobei
der Behälter (5) langgestreckt ist, der Vibrationsantrieb (17) an einem ersten Längsende des Behälters vorgesehen ist und ein Antrieb (19) zum Bewegen des Behälters (5) relativ zu der Beschichter-Ausgabeöffnung (11) an einem zweiten Längsende des Behälters (5) vorgesehen ist.

11. Beschichteranordnung (1) nach einem der vorangehenden Ansprüche, wobei
eine Außenwand (5a) des Behälters (5) im Querschnitt eine sich nach unten hin verjüngende Form hat und/oder
eine Außenwand (5a) des Behälters (5) im Querschnitt eine Kreisbogenform hat und/oder
eine Außenwand (5a) des Behälters (5) im Querschnitt eine Wannenform hat.

12. Beschichteranordnung (1) nach einem der vorangehenden Ansprüche, wobei
der Behälter (5) langgestreckt ist und
in Längsrichtung des Behälters ein oder mehrere Querstege (5b) vorgesehen sind.

13. Beschichteranordnung (1) nach einem der vorangehenden Ansprüche, wobei
der Beschichter (3) ferner einen Vorlagebehälter (27) aufweist, der eingerichtet ist, um den Behälter (5) mit partikelförmigem Baumaterial zu speisen, und
der Behälter (5) relativ zu dem Vorlagebehälter (27) bewegbar ist.

14. Beschichteranordnung (1) nach einem der vorangehenden Ansprüche, ferner aufweisend:
eine Steuereinheit (C), die eingerichtet ist, um den Behälter (5) mittels eines/des Antriebs (19) relativ zu der Beschichter-Ausgabeöffnung (11) zu bewegen, um dadurch den Austrag zu variieren.

15. 3D-Drucker, aufweisend eine Beschichteranordnung (1) nach einem der vorangehenden Ansprüche.

## Claims

1. Coater assembly (1) for a 3D printer, comprising:
a coater (3) including
a container (5) which defines an inner cavity for receiving particulate construction material which opens into a container opening (7) for outputting the particulate construction material from the container (5), and
an output region (9) which defines a coater output opening (11) for outputting the particulate construction material from the coater (3) onto a construction field,
wherein the container (5) is movable relative to the coater output opening (11), so that, by moving the container (5) relative to the coater output opening (11), a discharge of particulate construction material from the inner cavity through the container opening (7) and the coater output opening (11) onto the construction field is variable,
wherein the coater assembly (1) further comprises a vibration device, comprising a vibration drive (17), by which particulate construction material received in the container can be vibrated, and
wherein the container (5) is pivotable relative to the coater output opening (11) about a pivot axis (21),
**characterized in that**
the vibration drive (17) excites the pivot axis (21) of the container (5) in an axial direction.

2. Coater assembly (1) according to claim 1, wherein,
by moving the container (5) relative to the coater output opening (11), the discharge of particulate construction material can be dosed.

3. Coater assembly (1) according to claim 1 or 2, wherein,
by moving the container (5) relative to the coater output opening (11), the discharge of particulate construction material can be suppressed.

4. Coater assembly (1) according to any one of claims 1 to 3, wherein
the container (5) is pivotable relative to the coater output opening (11).

5. Coater assembly (1) according to any one of claims 1 to 4, wherein
the output region (9) comprises at least one stroking/sweeping member (13a) configured to stroke construction material output from the coater output opening (11) to thereby level and/or compress the output particulate material, and
the container (5) is movable relative to the at least one stroking/sweeping member (13a).

6. Coater assembly (1) according to claim 5, wherein the coater (3) further comprises a support structure (15) to which the at least one stroking/sweeping member (13a) is attached, for example rigidly attached.

7. Coater assembly (1) according to claim 6, further comprising
a bearing block (23) to which the support structure (15) is pivotably attached, so that the support structure (15) and the at least one stroking/sweeping member (13a) attached thereto are pivotable relative to the bearing block (23) to set an angle of the at least one stroking/sweeping member (13a).

8. Coater assembly (1) according to claim 6 or 7, wherein
the container (5) is pivotably attached to the support structure (15).

9. Coater assembly (1) according to any one of the preceding claims, further comprising
a guide structure and a drive by which the coater (3) is movable across the construction field, for example horizontally and/or linearly.

10. Coater assembly (1) according to any one of the preceding claims, wherein
the container (5) is elongated, the vibration drive (17) is provided at a first longitudinal end of the container, and a drive (19) for moving the container (5) relative to the coater output opening (11) is provided at a second longitudinal end of the container (5).

11. Coater assembly (1) according to any one of the preceding claims, wherein
an outer wall (5a) of the container (5) has a downwardly tapering shape in a cross-section and/or
an outer wall (5a) of the container (5) has a circular arc shape in a cross-section and/or
an outer wall (5a) of the container (5) has a trough shape in a cross-section.

12. Coater assembly (1) according to any one of the preceding claims, wherein
the container (5) is elongated and
one or more transverse ridges (5b) are provided in the longitudinal direction of the container.

13. Coater assembly (1) according to any one of the preceding claims, wherein
the coater (3) further comprises a storage container (27) configured to feed the container (5) with particulate construction material, and
the container (5) is movable relative to the storage container (27).

14. Coater assembly (1) according to any one of the preceding claims, further comprising:
a control unit (C) configured to move the container (5) relative to the coater output opening (11) by means of a/the drive (19) to thereby vary the discharge.

15. 3D printer comprising a coater assembly (1) according to any one of the preceding claims.

## Revendications

1. Système de revêtement (1) pour une imprimante 3D, comportant :
un dispositif de revêtement (3) avec
un récipient (5) qui définit une cavité intérieure destinée à recevoir un matériau de construction particulaire qui débouche dans un orifice de récipient (7) pour la distribution du matériau de construction particulaire à partir du récipient (5), et
une zone de distribution (9) qui définit un orifice de distribution (11) du dispositif de revêtement pour la distribution du matériau de construction particulaire à partir du dispositif de revêtement (3) sur une zone de construction,
le récipient (5) étant mobile relativement à l'orifice de distribution (11) du dispositif de revêtement de telle sorte que, par un déplacement du récipient (5) relativement à l'orifice de distribution (11) du dispositif de revêtement, il est possible de faire varier une décharge du matériau de construction particulaire sur la zone de construction à partir de la cavité intérieure à travers l'orifice de récipient (7) et l'orifice de distribution (11) du dispositif de revêtement,
le système de revêtement (1) comportant en outre
un dispositif de vibration comportant un entraînement de vibration (17), avec lequel dispositif/entraînement le matériau de construction particulaire reçu dans le récipient peut être mis en vibration,
et le récipient (5) pouvant pivoter relativement à l'orifice de distribution (11) du dispositif de revêtement autour d'un axe de pivotement (21),
**caractérisé en ce que**
l'entraînement de vibration (17) impulse l'axe de pivotement (21) du récipient (5) dans la direction axiale.

2. Système de revêtement (1) selon la revendication 1,
la décharge du matériau de construction particulaire pouvant être dosée par un déplacement du récipient (5) relativement à l'orifice de distribution (11) du dispositif de revêtement.

3. Système de revêtement (1) selon la revendication 1 ou 2,
la décharge du matériau de construction particulaire pouvant être empêchée par un déplacement du récipient (5) relativement à l'orifice de distribution (11) du dispositif de revêtement.

4. Système de revêtement (1) selon l'une des revendications 1 à 3,
le récipient (5) pouvant pivoter relativement à l'orifice de distribution (11) du dispositif de revêtement.

5. Système de revêtement (1) selon l'une des revendications 1 à 4,
la zone de distribution (9) comportant au moins un élément de balayage (13a) qui est agencé pour balayer le matériau de construction distribué à partir de l'orifice de distribution (11) du dispositif de revêtement afin de niveler et/ou densifier le matériau particulaire distribué, et
le récipient (5) étant mobile relativement à l'au moins un élément de balayage (13a).

6. Système de revêtement (1) selon la revendication 5,
le dispositif de revêtement (3) comportant en outre une structure de support (15) sur laquelle l'au moins un élément de balayage (13a) est mis en place, par exemple mis en place de façon rigide.

7. Système de revêtement (1) selon la revendication 6, comportant en outre
un support de palier (23) sur lequel la structure de support (15) est mise en place de façon à pouvoir pivoter de telle sorte que la structure de support (15) et l'au moins un élément de balayage (13a) mis en place sur celle-ci peuvent pivoter relativement au support de palier (23) pour régler un angle d'attaque de l'au moins un élément d'application (13a).

8. Système de revêtement (1) selon la revendication 6 ou 7,
le récipient (5) étant mis en place de façon pivotante sur la structure de support (15).

9. Système de revêtement (1) selon l'une des revendications précédentes, comportant en outre
une structure de guidage et un entraînement, avec lesquels le dispositif de revêtement (3) peut être déplacé au-dessus la zone de construction, par exemple de façon horizontale et/ou linéaire.

10. Système de revêtement (1) selon l'une des revendications précédentes,
le récipient (5) étant allongé, l'entraînement de vibration (17) étant prévu à une première extrémité longitudinale du récipient, et un entraînement (19) étant prévu à une deuxième extrémité longitudinale du récipient (5) pour le déplacement du récipient (5) relativement à l'orifice de distribution (11) du dispositif de revêtement.

11. Système de revêtement (1) selon l'une des revendications précédentes,
une paroi extérieure (5a) du récipient (5) ayant une section transversale qui se rétrécit vers le bas, et/ou
une paroi extérieure (5a) du récipient (5) ayant une section transversale en forme d'arc de cercle, et/ou
une paroi extérieure (5a) du récipient (5) ayant une section transversale en forme de cuvette.

12. Système de revêtement (1) selon l'une des revendications précédentes, le récipient (5) étant allongé et
une ou plusieurs traverses (5b) étant prévues dans la direction longitudinale du récipient.

13. Système de revêtement (1) selon l'une des revendications précédentes,
le dispositif de revêtement (3) comportant en outre un récipient collecteur (27) qui est agencé pour alimenter le récipient (5) en matériau de construction particulaire, et le récipient (5) étant mobile relativement au récipient collecteur (27).

14. Système de revêtement (1) selon l'une des revendications précédentes, comportant en outre :
une unité de commande (C) qui est agencée pour déplacer le récipient (5) au moyen d'un/de l'entraînement (19) relativement à l'orifice de distribution (11) du dispositif de revêtement pour faire varier ainsi la décharge.

15. Imprimante 3D, comportant un système de revêtement (1) selon l'une des revendications précédentes.
